Europäisches Patentamt

European Patent Office

Office européen des brevets

(19)

(11) Veröffentlichungsnummer: **0 042 600**
**A2**

(12) **EUROPÄISCHE PATENTANMELDUNG**

(21) Anmeldenummer: 81104725.7

(22) Anmeldetag: 19.06.81

(51) Int. Cl.³: **G 06 F 9/00**
**G 05 B 19/12, H 03 J 5/00**
**H 04 N 5/00**

(30) Priorität: 21.06.80 DE 3023199

(43) Veröffentlichungstag der Anmeldung:
30.12.81 Patentblatt 81/52

(84) Benannte Vertragsstaaten:
AT BE CH FR GB IT LI NL SE

(71) Anmelder: International Standard Electric Corporation
320 Park Avenue
New York New York 10022(US)

(72) Erfinder: Andrich, Wolfgang, Dr.
Im Brünnlislehen 30
D-7530 Pforzheim(DE)

(74) Vertreter: Thul, Leo, Dipl.-Phys.
Kurze Strasse 8 Postfach 300 929
D-7000 Stuttgart 30(DE)

(54) **Gerät der Unterhaltungselektronik mit einer Programmiereinrichtung für vorausgewählte Rundfunk- und/oder Fernsehprogrammbeiträge.**

(57) Bei einem Empfangsgerät der Unterhaltungselektronik, das zur selbsttätigen Programmwahl einen Programmspeicher in einer Programmiereinrichtung enthält, ist zur Vereinfachung der Programmierarbeit eine Leseeinrichtung an den Programmeingang der Programmiereinrichtung angeschlossen. Mit der Leseeinrichtung werden die auf einem Aufzeichnungsträger enthaltenen maschinell lesbaren Daten der vom Benutzer aus einem Rundfunk- und/oder Fernsehprogramm ausgewählten Programmbeiträge gelesen und an die Programmiereinrichtung übertragen.

Fig.1

EP 0 042 600 A2

Gerät der Unterhaltungselektronik
mit einer Programmiereinrichtung für vorausgewählte
Rundfunk- und/oder Fernsehprogrammbeiträge

Die Erfindung betrifft ein Gerät der Unterhaltungselektronik der im Oberbegriff des Anspruches 1 angegebenen Art.

Videorecordergeräte beispielsweise enthalten eine Programmiereinrichtung mit einem Programmspeicher, in den der Benutzer des Gerätes über eine Tastatur von Hand die Daten (Programm-Nummer, Tagesnummer, Ein- und Ausschaltzeit) aus einem Fernsehprogramm ausgewählter Programmbeiträge eingibt. Die Programmiereinrichtung vergleicht das eingespeicherte Programm mit einer Zeitschalteinrichtung und schaltet zur vorgewählten Zeit das Gerät auf dem eingespeicherten Kanal ein und aus.

Eine Programmiereinrichtung zum vorgewählten Ein- und Ausschalten unterschiedlicher Geräte der Unterhaltungselektronik ist aus der Zeitschrift "Funk-Technik" 1973, Nr. 17, Seite 62o bekannt, in dessen Programmspeicher die Daten einer größeren Anzahl von Programmbeiträgen aus Rundfunk- und/oder Fernsehprogrammen eingespeichert werden können. Auch bei dieser bekannten Programmiereinrichtung müssen die Daten der vorausgewählten Programmbeiträge vom Benutzer über eine Tastatur von Hand in den Programmspeicher eingegeben werden.

Die Programmierung der vorausgewählten Programmbeiträge über eine Tastatur von Hand erfordert jedoch vom Benutzer

./.

einen hohen Programmieraufwand, der insbesondere für den im Programmieren meist ungeübten Rundfunk- und Fernsehteilnehmer unzumutbar ist.

Der Erfindung liegt, hiervon ausgehend, die Aufgabe zugrunde, ein Gerät der eingangs angegebenen Art so auszubilden, daß auch der im Programmieren ungeübte Benutzer des Gerätes in einfacher Weise die von ihm aus einem Rundfunk- und/oder Fernsehprogramm ausgewählten Programmdarbietungen in den Programmspeicher der Programmiereinrichtung einspeichern kann.

Diese Aufgabe wird gemäß der Erfindung bei einem Gerät der im Oberbegriff des Anspruches 1 angegebenen Art durch die im kennzeichnenden Teil dieses Anspruches angegebenen technischen Merkmale gelöst.

Die Erfindung weist insbesondere den Vorteil auf, daß der Benutzer des Gerätes die Daten der ausgewählten Programmdarbietungen nicht mehr in einer bestimmten, vom Benutzer einzuhaltenden Reihenfolge über eine Tastatur in den Programmspeicher eingeben muß, sondern daß er nur noch einen Teil der Leseeinrichtung der Programmiereinrichtung mit einem Aufzeichnungsträger zusammenbringen muß, der die Daten der ausgewählten Programmbeiträge in der erforderlichen Reihenfolge und im erforderlichen Umfang in einer für die Leseeinrichtung lesbaren Form enthält. Dem Benutzer wird mit den Mitteln der Erfindung die Programmierarbeit abgenommen.

Die Unteransprüche kennzeichnen vorteilhafte Ausgestaltungen der Erfindung.

.\/.

Die Verwendung eines Lesestiftes, wie er in den Unteransprüchen angegeben ist, zum Lesen einer maschinell lesbaren Strichcodeschrift, ist beispielsweise aus der Zeitschrift "Funkschau" 1980, Heft 1o, Seite 69 bekannt. Jedoch ist an keiner Stelle ein Vorschlag zu finden, einen Lesestift zum Lesen von Daten eines Rundfunk- und/oder Fernsehprogrammes zu verwenden und zur Einspeicherung dieser Daten an eine Programmiereinrichtung zum vorgewählten Ein- und Ausschalten von Geräten der Unterhaltungselektronik anzuschließen.

Die Erfindung wird nachfolgend anhand einiger vorteilhafter Ausführungsbeispiele näher erläutert. In den zugehörigen Zeichnungen zeigen

Figur 1 ein Empfangsgerät der Unterhaltungselektronik in einer schematischen Blockschaltungsdarstellung mit einer Schaltungsanordnung nach der Erfindung,

Figur 2 ein Fernsehgerät mit eingebauter Bedienungseinrichtung und mit einem an diese angeschlossenen Lesestift einer in der Bedienungseinrichtung enthaltenen Leseeinrichtung,

Figur 3a einen Ausschnitt aus dem Gehäuse eines Fernsehgerätes, dessen eine Gehäusekante eine vertieft gelagerte Lesezeile einer Leseeinrichtung für eine Programmiereinrichtung des Gerätes aufweist,

Figur 3b ein Gehäuse nach Figur 3a mit einem in die Lesestation eingelegten streifenförmigen Aufzeichnungsträger.

./.

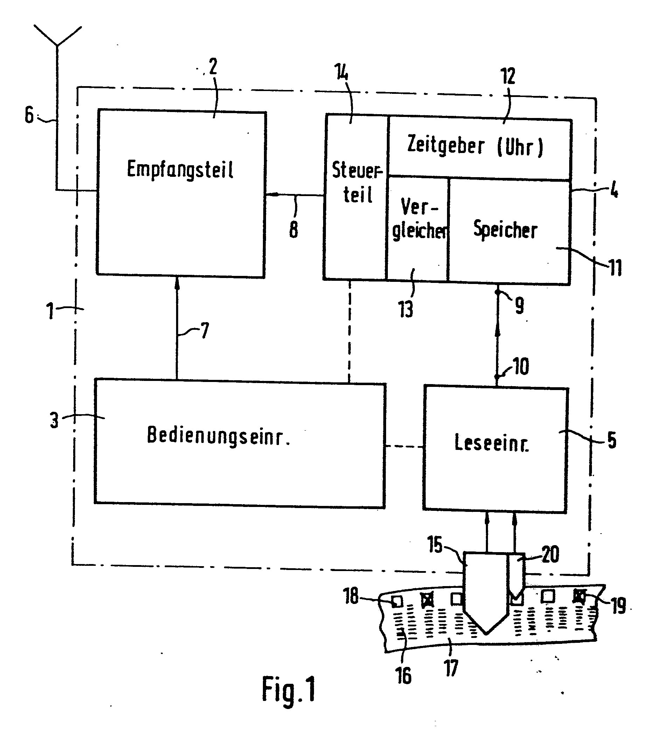

In Figur 1 ist ein Empfangsgerät 1 der Unterhaltungselektronik mit den für die Erläuterung der Erfindung
erforderlichen Schaltungsblöcken 2 bis 5 in einer Blockschaltung schematisch dargestellt. Ein Empfangsteil 2,
das an eine Empfangsantenne 6 angeschlossen ist, wird
über Steuerleitungsbündel 7 und 8 von einer Bedienungseinrichtung 3 und einer Programmiereinrichtung 4 gesteuert. An den Programmeingang 9 der Programmiereinrichtung ist der Ausgang 1o einer Leseeinrichtung 5 angeschlossen.

Die Programmiereinrichtung 4 enthält im Wesentlichen
einen Programmspeicher 11, in den die Daten von Programmdarbietungen eingespeichert werden, die vom Benutzer
aus einem Rundfunk- und/oder Fernsehprogramm ausgewählt
werden, einen als Uhr ausgebildeten Zeitgeber 12, der
andauernd Tag und Uhrzeit ausgibt, einen Vergleicher 13,
der die Ausgangsdaten des Zeitgebers mit den Daten im
Programmspeicher vergleicht und bei Zeitidendität die
Steuerdaten der eingespeicherten Programmdarbeitungen
an einen Steuerteil 14 der Programmiereinrichtung weiterleitet. Das Steuerteil 14 setzt die Steuerdaten in
Schalt- und Einstellsignale für das Empfangsgerät um.

Die Leseeinrichtung 5 liest mittels einer Lesestation
15 die maschinell lesbaren Daten 16 eines an ihr vorbeibewegten Aufzeichnungsträgers 17, der beispielsweise
einer Programmzeitschrift entnommen wurde und der in
einer maschinell lesbaren Form die Daten der in der Programmzeitschrift abgedruckten Programmbeiträge enthält.
Im dargestellten Ausführungsbeispiel wiest der Aufzeichnungsträger zusätzlich Markierungsfelder 18 auf. Der Benutzer versieht die Markierungsfelder der Programmbei-

./.

träge mit einem Markierungszeichen 19, die er zur Einspeicherung in die Programmiereinrichtung 4 aus dem Programm ausgewählt hat. Zum Auffinden dieser Markierungszeichen 19 enthält im dargestellten Ausführungsbeispiel die Lesestation 15 der Leseeinrichtung zusätzlich ein Leseelement 2o zum Erkennen der markierten Markierungsfelder 18. In diesem Fall werden von der Leseeinrichtung nur dann gelesene Programmdaten 16 eines in sich abgeschlossenen Datenblockes einer Programmdarbietung an den Ausgang 1o übertragen, wenn zuvor oder gleichzeitig ein Markierungszeichen 19 erkannt wurde. Damit entfällt jegliche weitere Programmierungsarbeit durch den Benutzer des Gerätes.

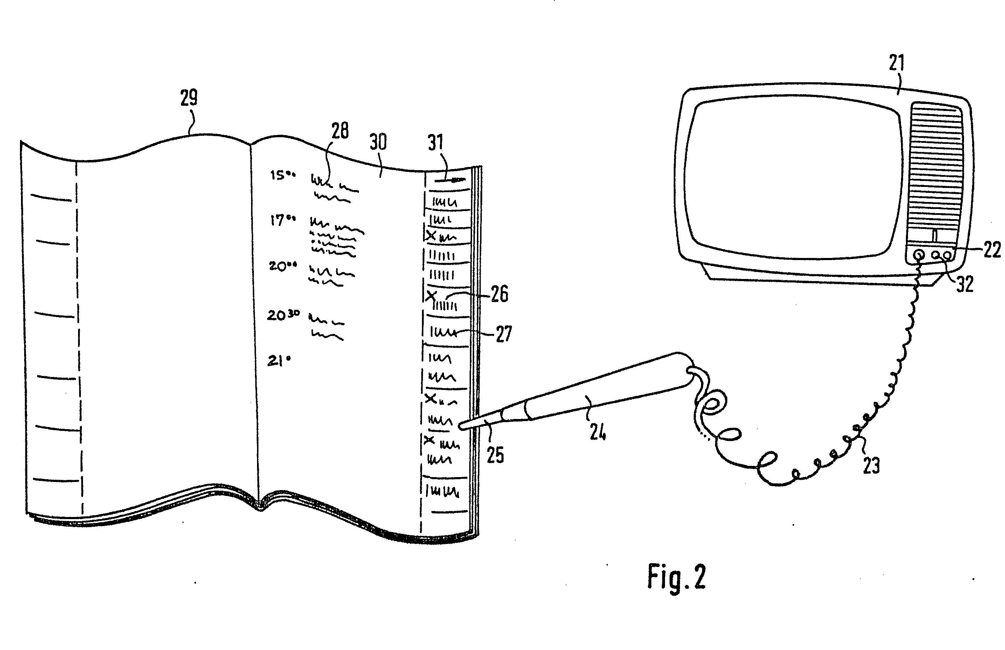

In Figur 2 ist ein Fernsehgerät 21 mit einer nicht lösbar in das Gerät eingebauten Bedienungseinrichtung 22 dargestellt. An die Bedienungseinrichtung ist über ein Kabel 23 ein Lesestift 24 angeschlossen, dessen Spitze 25 eine Lesestation zum optischen Lesen der Striche 26 einer Strichcodeschrift aufweist. Der Lesestift ist Bestandteil einer in der Bedienungseinrichtung 22 enthaltenen Leseeinrichtung, deren Datenausgang an den Programmeingang einer in dem Fernsehgerät enthaltenen Programmiereinrichtung angeschlossen ist.

Zum Einspeichern der in einem Datenblock 27 eines Programmbeitrages 28 eines in einer Programmzeitschrift 29 enthaltenen Rundfunk- und/oder Fernsehprogrammes in den Programmspeicher der Programmiereinrichtung des Fernsehgerätes 21 führt der Benutzer des Gerätes den Lesestift 24 auf den aufgeschlagenen Seiten 3o der Programmzeitschrift in der angegebenen Pfeilrichtung über die Datenblöcke der Programmbeiträge, die der Benutzer für eine Einspeicherung

./.

ausgewählt hat, nachdem er zuvor die Leseeinrichtung an einem Schalter 32 der Bedienungseinrichtung 22 eingeschaltet hat. Die vom Lesestift 24 aufgenommenen Daten eines Programmbeitrages werden in der Leseeinrichtung in für die Programmiereinrichtung geeignete Signale umgesetzt und an diese übertragen.

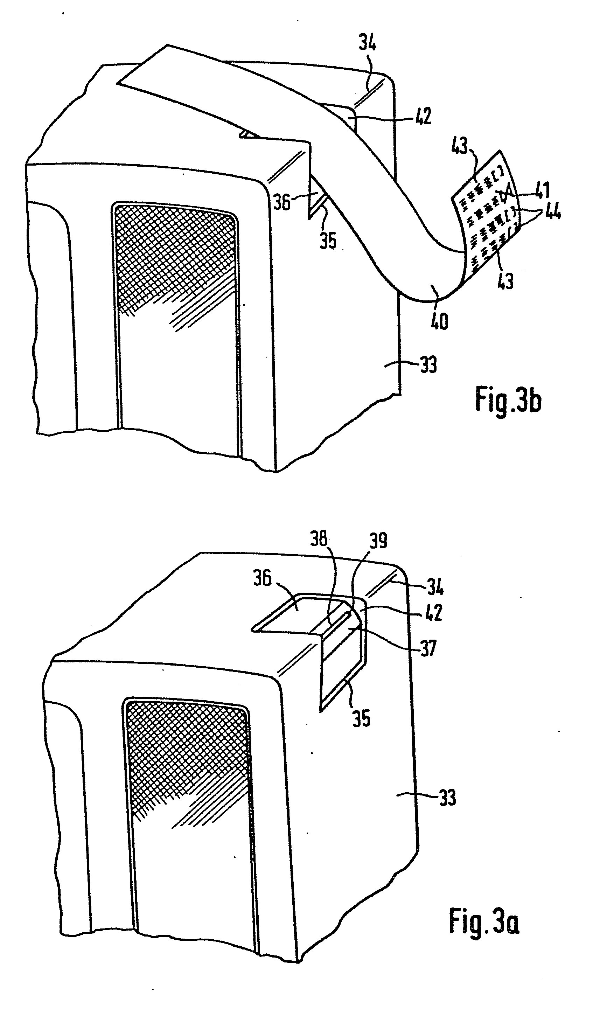

Das in den Figuren 3a und 3b in einem Ausschnitt dargestellte Gehäuse 33 eines Fernsehgerätes weist an einer Kante 34 einen Ausschnitt 35 auf, der eine an dieser Stelle vertieft angebrachte Lesestation 36 einer im Gerät enthaltenen Leseeinrichtung für eine ebenfalls im Gerät enthaltene Programmiereinrichtung zur Speicherung der Daten vom Benutzer vorausgewählter Programmbeiträge eines Rundfunk- und/oder Fernsehprogrammes freigibt. Am gewölbten Grund 37 der vom Ausschnitt 35 und der Lesestation gebildeten Vertiefung ist eine Lesezeile 38 optischer Leseelemente angeordnet. An einem Ende enthält die Lesezeile ein Leseelement 39 zum Erkennen vom Benutzer auf einem Aufzeichnungsträger 40 angebrachter Markierungszeichen 41. In den Ausschnitt 35 wird ein streifenförmiger Aufzeichnungsträger 40 eingelegt, so daß er auf der Lesestation 36 aufliegt und im dargestellten Ausführungsbeispiel von Hand über die Lesezeile 38 hinweggezogen werden kann. Die Seitenflächen 42 des Ausschnittes 35 bilden dabei die Führungsflächen, die sicherstellen, daß die auf dem Aufzeichnungsträger befindlichen Datenblöcke 43 an der vorgesehenen Stelle der Lesezeile 38 vorbeigezogen werden.

Der streifenförmige Aufzeichnungsträger 40 enthält in einer für die Leseeinrichtung des Gerätes lesbaren Form die für eine Programmierung erforderlichen Daten der Programmbeiträge eines Rundfunk- und/oder Fernsehprogrammes. Die Daten jedes Programmbeitrages sind in einem Datenblock 43 zusammengefaßt, der außerdem noch ein Markierungsfeld 44 aufweist. Der Benutzer versieht das Markierungsfeld des Datenblockes mit einem Markierungszeichen 41, dessen Programmbeitrag er in die Programmiereinrichtung zur automatischen Programmwahl einspeichern will. Beim Durchziehen des streifenförmigen Aufzeichnungsträgers werden von der Leseeinrichtung nur die Daten der markierten Datenblöcke an die Programmiereinrichtung übertragen.

Anstelle den Aufzeichnungsträger oder die Lesestation von Hand zu bewegen, sind auch Ausführungsbeispiele möglich, deren Leseeinrichtung eine Lagerungs- und Antriebsvorrichtung für den Aufzeichnungsträger aufweist, insbesondere für einen scheibenförmigen Aufzeichnungsträger.

3 Blatt Zeichnungen

Patentansprüche

1. Gerät der Unterhaltungselektronik mit einer Programmiereinrichtung für vorausgewählte Programmbeiträge wenigstens eines Rundfunk- und/oder Fernsehprogrammes, und mit einer mit dem Gerät baulich vereinigten und/oder einer davon abgesetzten Bedienungseinrichtung, dadurch gekennzeichnet, daß die Programmiereinrichtung (4) mit ihrem Programmeingang (9) an den Ausgang (1o) einer im Gerät (1) oder an der Bedienungseinrichtung (3) vorgesehenen Leseeinrichtung (5) für einen Aufzeichnungsträger (17) angeschlossen ist.

2. Gerät nach Anspruch 1, gekennzeichnet durch eine Leseeinrichtung (5) für einen optisch lesbare, aufgedruckte oder in eine Trägerschicht eingebrannte Aufzeichnungselemente (26) enthaltenden Aufzeichnungsträger (3o).

3. Gerät nach Anspruch 1, gekennzeichnet durch eine Leseeinrichtung (5) für einen optisch oder mechanisch lesbare, geprägte oder gestanzte Aufzeichnungselemente enthaltenden Aufzeichnungsträger.

4. Gerät nach Anspruch 1, gekennzeichnet durch eine Leseeinrichtung (5) für einen magnetisch lesbaren Aufzeichnungsträger.

18. Juni 1989
lr/mü                                                    ./.

5. Gerät nach einem der Ansprüche 1 bis 4, dadurch gekennzeichnet, daß die Leseeinrichtung (5) mit der Bedienungseinrichtung (22 baulich vereinigt ist.

6. Gerät nach einem der Ansprüche 1 bis 5, dadurch gekennzeichnet, daß die Lesestation (15) ein Leseelement (2o)
zum Lesen mit einer Markierung (19) versehener Markierungsfelder (18) eines Aufzeichnungsträgers (17) enthält.

7. Gerät nach einem der Ansprüche 1 bis 5, dadurch gekennzeichnet, daß die Leseeinrichtung (5) einen von Hand
über den Aufzeichnungsträger (3o) führbaren Lesestift
(24) aufweist.

8. Gerät nach Anspruch 7, dadurch gekennzeichnet, daß der
Lesestift (24) mit dem Gerät (21) oder der Bedienungseinrichtung (22) verbunden ist.

9. Gerät nach einem der Ansprüche 1 bis 6, dadurch gekennzeichnet, daß das Gehäuse (33) des Gerätes (1) oder der
Bedienungseinrichtung an einer Gehäusekante (34) eine
Vertiefung (35/36) aufweist, auf deren Grund längs der
abgesenkten Kante (37) eine Lesezeile (38) angeordnet
ist, und daß die Seitenwände (42) der Vertiefung die
Führungsflächen für einen durch die Vertiefung bewegbaren Aufzeichnungsträger (39) sind.

Fig.1

W.Andrich-5
27.6.80

Fig.2

2/3

0042600

W. Andrich-5
27. 6. 80

Fig.3b

Fig.3a

W. Andrich-5
27.6.80